(19) Europäisches Patentamt
European Patent Office
Office européen des brevets

(11) Veröffentlichungsnummer: **0 303 908 B1**

(12) **EUROPÄISCHE PATENTSCHRIFT**

(45) Veröffentlichungstag der Patentschrift: **03.11.93**

(51) Int. Cl.$^5$: **C08L 83/04**

(21) Anmeldenummer: **88112711.2**

(22) Anmeldetag: **04.08.88**

# (54) In der Hitze härtbare Organopolysiloxan-Zusammensetzungen.

(30) Priorität: **05.08.87 DE 3726010**

(43) Veröffentlichungstag der Anmeldung:
**22.02.89 Patentblatt 89/08**

(45) Bekanntmachung des Hinweises auf die Patenterteilung:
**03.11.93 Patentblatt 93/44**

(84) Benannte Vertragsstaaten:
**BE DE ES FR GB IT NL SE**

(56) Entgegenhaltungen:
**EP-A- 0 214 664**

**DATABASE WPIL, Nr. 85-193508, Derwent Publications Ltd, Londen GB; & JP-A-60 120 755**

(73) Patentinhaber: **WACKER-CHEMIE GMBH**
**Hanns-Seidel-Platz 4**
**D-81737 München(DE)**

(72) Erfinder: **Gamon, Norbert, Dr. Dipl.-Chem.**
**Im Domherrenfeld 1**
**D-2105 Seevetal 11(DE)**
Erfinder: **Pradl, Ferdinand, Dr. Dipl.-Chem.**
**Marktlerstrasse 84**
**D-8263 Burghausen(DE)**
Erfinder: **Pachaly, Bernd, Dr. Dipl.-Chem.**
**Robert-Koch-Strasse 167**
**D-8263 Burghausen(DE)**
Erfinder: **Frey, Volker, Dr. Dipl.-Chem.**
**Jahnweg 5**
**D-8263 Burghausen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.6/3.3.1)

## Beschreibung

Die Erfindung betrifft Organopolysiloxan-Zusammensetzungen, welche auch beim Druck der umgebenden Atmosphäre bei erhöhter Temperatur blasenfrei zu Elastomeren aushärten.

Aus US-A 2 723 966 (ausgegeben am 15. November 1955, D. C. Youngs, Dow Corning Corp.) ist eine solche, Dichlorbenzoylperoxid enthaltende Zusammensetzung bekannt. In JP-A 60-120 755 (offengelegt am 28. Juni 1985, M. Fukushima, Shin-Etsu Chemical Co.) sowie JP-A 60-120 754 (offengelegt am 28. Juni 1985, K. Numata, Shin-Etsu Chemical Co.) sind hitzehärtbare Silicongummi-Zusammensetzungen beschrieben, die neben zu härtendem Organopolysiloxan und organischem Peroxid zumindest ein Polysilan, Polysilalkylensiloxan und/oder Polyphenylensiloxan mit jeweils wenigstens zwei Si-H-Gruppen pro Moleküle enthalten.

Aufgabe der vorliegenden Erfindung war es, Organopolysiloxan-Zusammensetzungen der eingangs genannten Art bereitzustellen, welche während oder nach ihrer Härtung weder toxische polyhalogenierte aromatische Verbindungen freisetzen oder enthalten noch sich merklich verfärben. Weiterhin war es Aufgabe der vorliegenden Erfindung, Organopolysiloxan-Zusammensetzungen der eingangs genannten Art bereitzustellen, welche einen geringen Anteil an hydrolyseempfindlichen Si-H-Gruppen enthalten.

Diese Aufgaben werden durch die vorliegende Erfindung gelöst durch Bereitstellen von in der Hitze zu Elastomeren härtbaren Organopolysiloxan-Zusammensetzungen auf der Grundlage von Organopolysiloxanen, die aus Einheiten der Formel

$R_nSiO_{(4-n)/2}$ (I)

aufgebaut sind, wobei

- R gleiche oder verschiedene einwertige, gegebenenfalls substituierte Kohlenwasserstoffreste mit bis zu 12 Kohlenstoffatomen sind und als Substituenten der Reste R Halogenatome, Cyanoreste, Amino- und Mercaptogruppen in Fragen kommen und mindestens 80 % der Reste R Methylgruppen sind,
- n eine ganze Zahl im Wert von jeweils 0, 1, 2 oder 3 ist und durchschnittlich einen Wert von 1,8 bis 2,2 hat,

dadurch gekennzeichnet,
daß sie pro 100 Gewichtsteile der genannten Organopolysiloxane 0,01 bis 10 Gewichtsteile eines Organo(poly)silans der Formel

$R'_2R'''Si-[(SiR'''R'')_p(SiR'''_2)_q]-X$ (II)

enthalten, wobei in obiger Formel die Reste

- R' gleiche oder verschiedene einwertige, gegebenenfalls halogenierte Alkyl-, Alkenyl- oder Arylgruppen mit 1 bis 18 Kohlenstoffatomen,
- R'' gleiche oder verschiedene Alkylgruppen mit 1 bis 18 Kohlenstoffatomen,
- R''' gleiche oder verschiedene $C_1$- bis $C_6$-Alkoxygruppen oder Reste R',
- X ein Wasserstoffatom oder eine $C_1$- bis $C_6$-Alkoxygruppe, sowie

p und g ganze Zahlen, deren Summe mindestens 1 beträgt, bedeuten.

Beispiele für unsubstituierte Reste R sind Alkylreste, wie der Methyl-, Ethyl, n- Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Oktylreste, wie der n-Octylrest und iso-Oktylreste, wie der 2,2,4-Trimethylpentylrest, Nonylreste, wie der n-Nonylrest, Decylreste, wie der n-Decylrest, Dodecylreste, wie der n-Dodecylrest, Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- und Naphtylrest; Alkarylreste, wie o-, m-, p-Tolylreste, Xylylreste und Ethylphenylreste; Aralkylreste, wie der Benzylrest, der alpha- und der β-Phenylethylrest;

Beispiele für substituierte Reste R sind Cyanalkylreste, wie der β-Cyanethylrest, und halogenierte Kohlenwasserstoffreste, beispielsweise Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylreste.

Bevorzugt als Reste R sind $C_1$- bis $C_6$- Alkylreste, Vinylreste sowie Phenylreste.

Die erfindungsgemäßen Organopolysiloxan-Zusammensetzungen enthalten neben einer oder mehreren Arten von Organopolysiloxanen der Formel (I), auch Organo(poly)silane der Formel (II).

Vorzugsweise bedeuten die Reste

R' gleiche oder verschiedene, $C_1$- bis $C_4$- Alkylreste, $C_2$- bis $C_3$- Alkenylreste und Phenylreste;

R'' $C_1$- bis $C_4$- Alkylreste;

R''' die Methoxygruppe oder einen Rest R' in seiner bevorzugten Bedeutung;

X die Methoxygruppe, und die Summe von

p und q einen Wert von 2 bis 1000.

Die Darstellung solcher Organo(poly)silane ist hinreichend bekannt und beispielsweise in EP-A 214 664 (offengelegt am 18. März 1987, B. Pachaly et al., Wacker-Chemie GmbH) beschrieben. Sie sind beispielsweise durch die Umsetzung von Organoalkoxydisilanen mit Organohydrogensilanen in Gegenwart von Alkalimetallalkoholaten zugänglich. Die erwähnten Organoalkorydisilane lassen sich ihrerseits durch die Reaktion der als Sumpfprodukt der Rochow-Synthese anfallenden Organohalogendisilane mit Alkalimetallalkoholaten darstellen.

Dem Organo(poly)silan der Formel (II) bzw. den im Copolymeren enthaltenen Struktureinheiten dieses Organo(poly)silans kommt die Rolle des Härters zu. Die Zugabe eines weiteren Härters ist nicht erforderlich. Dies trifft insbesondere dann zu, wenn die erfindungsgemäßen Organopolysiloxan-Zusammensetzungen in Gegenwart von Sauerstoff, beispielsweise an der Luft, gehärtet werden sollen.

Es kann jedoch von Fall zu Fall empfehlenswert sein, zusätzlich zu Organo(poly)silan der Formel (II) weitere Härter zuzugeben. Es sind dies besonders organische Peroxide, vorzugsweise solche, die keine Halogenarylreste enthalten, wie beispielsweise Dibenzoylperoxid, Di-tert.-butylperoxid, tert.Butylperbenzoat, tert.-Butylperoxyphenylcarbonat, 2,5-Dimethyl-2,5-(di-tert.-butylperoxi)-hexin, 1,1-Bis(tert.-butylperoxi)-3,3,5-trimethylcyclohexan, Dicumylperoxid und Organosiliciumverbindungen mit Peroxigruppen.

Die erfindungsgemäßen Organopolysiloxan-Zusammensetzungen enthalten 0,01 bis 10 Gew.%, insbesondere 0,1 bis 5 Gew.%, speziell 0,3 bis 2 Gew.% an Organo(poly)silanen der Formel (II), jeweils bezogen auf das Gewicht von eingesetztem Organopolysiloxan.

Die erfindungsgemäßen Organopolysiloxan-Zusammensetzungen enthalten vorzugsweise 0 - 5 Gew.%, insbesondere 0 bis 2 Gew.% an weiteren Härtern - besonders organischen Peroxiden - jeweils bezogen auf das Gewicht von eingesetztem Organopolysiloxan.

Neben den vorgenannten Komponenten können die erfindungsgemäßen Organopolysiloxan-Zusammensetszungen weitere Stoffe enthalten, wie Füllstoffe, Weichmacher, Pigmente, UV-Absorber und dergleichen mehr.

Beispiele für Füllstoffe sind nicht verstärkende Füllstoffe, also Füllstoffe mit einer BET-Oberfläche von bis zu 50 $m^2/g$, wie Quarz, Diatomeenerde, Calciumsilikat, Zirkoniumsilikat, Zeolithe, Metalloxidpulver, wie Aluminium-, Titan-, Eisen-, oder Zinkoxide bzw. deren Mischoxide, Bariumsulfat, Calciumcarbonat, Gips, Siliciumnitrid, Siliciumcarbid, Bornitrid, Glas- und Kunststoffpulver; verstärkende Füllstoffe, also Füllstoffe mit einer BET-Oberfläche von mehr als 50 $m^2/g$, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststoffasern. Die genannten Füllstoffe können hydrophobiert sein, beispielsweise durch die Behandlung mit Organosilanen bzw. -siloxanen oder durch Verätherung von Hydroxylgruppen zu Alkoxygruppen. Es kann eine Art von Füllstoff, es kann auch ein gemisch von mindestens zwei Füllstoffen eingesetzt werden. Die erfindungsgemäßen Organopolysiloxan-Zusammensetzungen lassen sich bei erhöhter Temperatur zu Elastomeren aushärten. Die zum vollständigen Aushärten notwendige Temperatur und Zeit hängen u. a. ab vom Mengenanteil des Organo(poly)silans der Formel (II) und der Art und dem Mengenanteil des gegebenenfalls zusätzlich verwendeten Härters, beispielsweise eines organischen Peroxids, in den erfindungsgemäßen Organopolysiloxan-Zusammensetzungen.

Vorzugsweise werden die erfindungsgemäßen Zusammensetzungen bei Temperaturen von 60 °C bis 800 °C, insbesondere von 100 °C bis 450 °C gehärtet.

Die Härtungsdauer der erfindungsgemäßen Zusammensetzungen hängt stark von der Härtungstemperatur und von der Schichtdicke bzw. Wandstärke ab.In den vorstehend genannten Temperaturbereichen werden zur Härtung der erfindungsgemäßen Zusammensetzungen bei deren Schichtdicke von ca. 1 bis 5 mm im allgemeinen Zeiten von 10 sec. bis 400 sec., insbesondere von 15 sec. bis 200 sec. benötigt.

Die Härtung kann beim Druck der umgebenden Atmosphäre, also ca. 0,1 MPa (abs.), sie kann aber auch bei höheren oder niedrigeren Drücken durchgeführt werden. Drücke von 0,05 bis 50 MPa (abs.), insbesondere von 0,09 bis 25 MPa (abs.) sind bevorzugt.

Die erfindungsgemäßen Organopolysiloxan-Zusammensetzungen enthalten vorzugsweise weniger als 10 Gewichts-ppm, insbesondere weniger als 5 Gewichts-ppm an Eisen-Fettsäuresalzen, jeweils bezogen auf das Gewicht der Organopolysiloxane.

In den nachstehenden Beispielen beziehen sich alle Mengenangaben, soweit nicht anders angegeben,auf das Gewicht. Sofern kein Druck angegeben ist, wurde der jeweilige Verfahrensschritt beim Druck

der umgebenden Atmosphäre durchgeführt, also bei einem Druck zwischen 0,09 und 0,11 MPa (abs.). Sofern keine Temperatur angegeben ist, wurde bei 20 °C bis 25 °C gearbeitet.

Beispiele:

Herstellung von Organosilan A:

Ein Gemisch aus 930 g 1,1,2-Trimethyl- 1,2,2-trimethorydisilan (4,79 mol) und 6 g Dimethylmethoxysilan erwärmte sich nach Zugabe von 0,6 g Natriummethylat rasch von 40 °C auf 96 °C. Nach 10 Minuten wurde Natriummethylat durch Zugabe von 30 g "Tonsil Optimum FF" (saure Tonerde, Fa. Süd-Chemie) desaktiviert. Anschließend wurden bei Temperaturen bis zu 150 °C 550 g Methyltrimethoxysilan abdestilliert. Der Rückstand von 380 g wurde in einem Dünnschichtverdampfer bei 170 °C und 100 Pa (abs.) von leichter siedenden Komponenten befreit.

Erhalten wurden 300 g eines Organosilans der Formel

$H_3C\text{-}O\text{-}Si(CH_3)_2\{Si(CH_3)_2\}_nH$ , wobei

n einen durchschnittlichen Wert zwischen 3 und 6 besaß, mit einer Viskosität von 80 $mm^2/s$ bei 25 °C und einer Dichte von 0,965 $g/cm^3$.

Herstellung von Organopolysilan B:

Ein Gemisch aus 700 g (3,61 Mol) 1,1,2-Trimethyl-1,2,2-trimethoxydisilan, 300 g (1,43 Mol) 1,2-Dimethyl-1,1,2,2-tetramethoxydisilan, 20 g Dimethylmethoxysilan und 2 g Natriummethylat erwärmte sich nach Erreichen einer Temperatur von 25 °C rasch ohne äußere Wärmezufuhr auf etwa 90 °C. Im Laufe einer Stunde wurde das Gemisch auf 200 °C erhitzt, wobei 760 g einer Mischung aus Dimethyldimethoxysilan und Methyltrimethoxysilan abdestilliert wurden. Der Rückstand (262 g) wurde in 250 ml Toluol gelöst und diese Lösung in einem Dünnschichtverdampfer bei 250 °C und einem Druck von 100 Pa (abs.) von den leichtersiedenden Komponenten befreit. Erhalten wurden 200 g eines Organopolysilans mit durchschnittlich 40 Siliciumatomen je Molekül, welches zwischen 35 °C und 70 °C zu einer Schmelze erweichte.

Herstellung der Organopolysiloxan-Grundmasse C:

Achtzig Gewichtsteile eines $\alpha;\omega$-Bis-dimethylvinylsiloxypolydiorganosiloxans einer Viskosität von $4.10^6$ mPa.s bei 25 °C, dessen Diorganosiloxygruppen zu 99,5 Mol% Dimethylsiloxygruppen und zu 0,5 Mol% Methylvinylsiloxygruppen waren, wurden mit 20 Gewichtsteilen einer hochdispersen hydrophoben Kieselsäure einer BET-Oberfläche von 250 $m^2/g$ in einem Kneter vermischt.

Herstellung der Organopolysiloxan-Grundmasse D:

Hundert Gewichtsteile eines $\alpha,\omega$-Bis-trimethylsiloxypolydiorganosiloxans einer Viskosität von $10^7$ mPa.s bei 23 °C, dessen Diorganosiloxygruppen zu 99,88 Mol% Dimethylsiloxy- und zu 0,12 Mol% Methylvinylsiloxygruppen sind, wurden mit 5 Gewichtsteilen eines $\alpha,\omega$-Bis-hydroxypolydimethylsiloxans einer Viscosität von 40 $mm^2/s$ bei 23 °C und 40 Gewichtsteilen einer hochdispersen pyrogen hergestellten Kieselsäure einer BET-Oberfläche von 200 $m^2/g$, die zu 60 Flächenprozent durch Behandlung mit Dimethyldichlorsilan hydrophobiert war, vermischt.

Beispiel 1:

In 50 g der Organopolysiloxan-Grundmasse C wurden auf einer Walze mit 0,5 g des Organosilans A eingemischt und aus dieser Mischung kreisrunde Scheiben einer Dicke von 0,5 cm und einem Durchmesser von 3 cm geformt. Diese Scheiben wurden auf einer Aluminiumfolie in einem Trockenschrank 2 h lang bei 200 °C gehalten. Die Scheiben waren danach zu einem farblosen, klaren und blasenfreien Elastomeren ausvulkanisiert.

Vergleichsbeispiel 1:

Beispiel 1 wurde wiederholt mit der Abänderung, daß kein Organosilan A zugemischt wurde. Nach der Temperaturbehandlung (2 h bei 200 ° C) waren die Scheiben noch unvulkanisiert.

Beispiele 2 - 4 und Vergleichsbeispiele 2 und 3:

a) In einem Walzenmischer wurden jeweils 100 Gewichtsteile der Organopolysiloxan-Grundmasse D mit den in der folgenden Tabelle angegebenen Mengen (in Gewichtsteilen) an Härtern (50 Gew.%ige Suspension von Dibenzoylperoxid in Dimethylpolysiloxan bzw. Organopolysilan B) vermischt.

Im Vergleichsbeispiel 3 wurde anstelle des Organopolysilans B ein Polycarbosilan der allgemeinen Formel

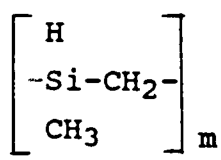

worin m Werte von 3 bis 10 annimmt und das einen Schmelzpunkt von ca. 90 ° C aufweist, verwendet. Dieses wurde gemäß DE-A 26 18 246 (offengelegt am 11. November 1976, S. Yajima et al.) durch Umsetzung von Dimethyldichlorsilan mit Natrium und anschließender Behandlung bei 450 bis 470 ° C im Autoklaven dargestellt. Vergleichsbeispiel 3 entspricht somit weitgehend der Lehre der eingangs zitierten JP-A 60-120 755.

b) Jeweils ein Teil jeder Mischung, deren Herstellung unter a) beschrieben wurde, wurden extrudiert, wobei die Temperatur des Heizkanals des Extruders 300 ° C und die Verweilzeit der Mischung in diesem Heizkanal 2 Minuten betrug. Es wurden jeweils Elastomere erhalten, welche anschließend 4 h lang bei 200 ° C in Heißluft getempert wurden. Das Aussehen dieser derart nachbehandelten Extrudate wurde in der folgenden Tabelle beurteilt.

c) Jeweils ein weiterer Teil jeder Mischung, deren Herstellung unter a) beschrieben wurde, wurde durch Preßvulkanisation bei einem Druck von 10 MPa (abs.) und einer Temperatur von 135 ° C 10 min. lang zu Platten ausgehärtet und anschließend 4 h lang bei 200 ° C in Heißluft getempert. An von aus diesen Platten ausgestanzten Probekörpern wurden physikalische Prüfungen vorgenommen. Die nachfolgende Tabelle zeigt die so ermittelten Werte für die Shore-A Härte, die Reißfestigkeit, den Weiterreißwiderstand, die Rückprallelastizität sowie die Verfärbung der Platten.

Tabelle:

| Zusätze zu 100 Tl der Organopolysiloxan-Grundmasse D | Beispiel Nr. 2 | 3 | 4 | Vergleichsbeispiel Nr. 2 | 3 |
|---|---|---|---|---|---|
| 50 %ige Suspension von Dibenzoylperoxid in Dimethylpolysiloxan | 1 | 1 | 0,5 | 1 | 1 |
| Organopolysilan B | 0,7 | 0,3 | 0,7 | - | - |
| Polycarbosilan | - | - | - | - | 0,5 |
| Prüfungen | | | | | |
| Härte (Shore A) | 54 | 51 | 50 | 53 | 50 |
| Reißfestigkeit (N/mm²) | 10,5 | 10,2 | 10,7 | 11,1 | 9,7 |
| Reißdehnung (%) | 630 | 730 | 610 | 610 | 640 |
| Weiterreißwiderstand (N/mm) | 26 | 28 | 29 | 22 | 26 |
| Rückprallelastizität ( % ) | 32 | 27 | 29 | 33 | 33 |
| Verfärbung der Platten nach der Jodfarbskala (DIN 6162) | 1 | 1,5 | 1 | 3 | 2 |
| Aussehen des Extrudates | blasenfrei transparent | blasenfrei transparent | vereinzelt Blasen transparent | Schaum trüb | viele Blasen trüb |

## Patentansprüche

1. In der Hitze zu Elastomeren härtbare Organopolysiloxan-Zusammensetzungen auf der Grundlage von Organopolysiloxanen, die aus Einheiten der Formel

$R_nSiO_{(4-n)/2}$ (I)

aufgebaut sind, wobei

- R gleiche oder verschiedene einwertige, gegebenenfalls substituierte Kohlenwasserstoffreste mit bis zu 12 Kohlenstoffatomen sind und als Substituenten der Reste R Halogenatome, Cyanoreste, Amino- und Mercaptogruppen in Fragen kommen und mindestens 80 % der Reste R Methylgruppen sind,
- n eine ganze Zahl im Wert von jeweils 0, 1, 2 oder 3 ist und durchschnittlich einen Wert von 1,8 bis 2,2 hat,

dadurch gekennzeichnet,
daß sie pro 100 Gewichtsteile der genannten Organopolysiloxane 0,01 bis 10 Gewichtsteile eines Organo(poly)silans der Formel

$R'_2R'''Si\text{-}[(SiR'''R'')_p(SiR'''_2)_q]\text{-}X$ (II)

enthalten, wobei in obiger Formel die Reste

- R' gleiche oder verschiedene einwertige, gegebenenfalls halogenierte Alkyl-, Alkenyl- oder Arylgruppen mit 1 bis 18 Kohlenstoffatomen,
- R'' gleiche oder verschiedene Alkylgruppen mit 1 bis 18 Kohlenstoffatomen,
- R''' gleiche oder verschiedene $C_1$- bis $C_6$-Alkoxygruppen oder Reste R',
- X ein Wasserstoffatom oder eine $C_1$- bis $C_6$-Alkoxygruppe, sowie

p und q ganze Zahlen, deren Summe mindestens 1 beträgt, bedeuten.

## Claims

**1.** Organopolysiloxane compositions which can be heat-vulcanized to give elastomers and are based on organopolysiloxanes built up from units of the formula

$R_nSiO_{(4-n)/2}$ (I)

where

- R are identical or different monovalent, optionally substituted hydrocarbon radicals having up to 12 carbon atoms, and suitable substituents of the radicals R are halogen atoms, cyano radicals, amino and mercapto groups, and at least 80% of the radicals R are methyl groups,
- n is an integer having a value of in each case 0, 1, 2 or 3, and on average has a value of from 1.8 to 2.2,

characterized in that they contain, per 100 parts by weight of said organopolysiloxanes, from 0.01 to 10 parts by weight of an organo(poly)silane of the formula

$R'_2R'''Si\text{-}[(SiR'''R'')_p(SiR'''_2)_q]\text{-}X$ (II)

where, in the above formula, the radicals

- R' denote identical or different monovalent, optionally halogenated alkyl, alkenyl or aryl groups having 1 to 18 carbon atoms;
- R'' denote identical or different alkyl groups having 1 to 18 carbon atoms;
- R''' denote identical or different $C_1$- to $C_6$-alkoxy groups or radicals R';
- X denotes a hydrogen atom or a $C_1$- to $C_6$-alkoxy group, and

p and q denote integers whose sum is at least 1.

## Revendications

**1.** Compositions d'organopolysiloxanes durcissables sous l'action de la chaleur en donnant des produits élastomères, à base d'organopolysiloxanes formés de motifs de formule :

$R_nSiO_{(4-n)/2}$ (I)

dans laquelle

R représente des radicaux hydrocarbonés pouvant avoir jusqu'à 12 atomes de carbone, identiques ou différents, monovalents et le cas échéant avec des substituants qui peuvent être des atomes d'halogènes ou des groupes cyano, amino et mercapto, et au moins 80 % des radicaux R sont des groupes méthyle, et

n est le nombre 0, 1, 2 ou 3, avec une valeur moyenne de 1,8 à 2,2,

compositions qui sont caractérisées en ce qu'elles comprennent, pour 100 parties en poids des organopolysiloxanes ci-dessus, de 0,01 à 10 parties en poids d'un organo(poly)silane de formule :

$R'_2R'''Si\text{-}[(SiR'''R'')_p(SiR'''_2)_q]\text{-}X$ (II)

dans laquelle

R' représente des alkyles, alcényles ou aryles pouvant avoir de 1 à 18 atomes de carbone, identiques ou différents, monovalents et le cas échéant halogénés,

R'' des alkyles identiques ou différents ayant de 1 à 18 atomes de carbone,

R''' des groupes alcoxy en $C_1$-$C_6$ ou des radicaux R', identiques ou différents,

X un atome d'hydrogène ou un alcoxy en $C_1$-$C_6$, et

p et q sont des entiers dont la somme est au moins égale à 1.